# EUROPÄISCHE PATENTANMELDUNG

(11) **EP 1 462 705 A1**
(43) Veröffentlichungstag der Anmeldung: **29.09.2004**
(21) Anmeldenummer: 04005369.6
(22) Anmeldetag: 06.03.2004
(51) Int. Cl.: F16L 53/00, F16L 59/02

(54) **Temperierband und Temperiersystem**

(30) Priorität: 26.03.2003 DE 10313571
(71) Anmelder: Krauss-Maffei Kunststofftechnik GmbH, 80997 München (DE)
(72) Erfinder: Ehrlicher, Stefan, 80997 München (DE)
(74) Vertreter: Zollner, Richard, Dipl.-Phys.

(57) **Zusammenfassung**

Es soll eine Temperiervorrichtung und ein darin zum Einsatz kommendes Temperierband vorgestellt werden, bei dem eine nachträgliche Montage möglich ist und das eine deutlich preiswertere Temperierung von Gegenständen erlaubt. Die Temperiervorrichtung soll nicht von der Länge des zu temperierenden Gegenstandes abhängig sein, zugleich einen hohen Wirkungsgrad erreichen und flexibel einsetzbar sein.

Diese Temperiervorrichtung zum Temperieren eines Gegenstandes mittels eines diesen zumindest bereichsweise umströmenden Temperiermediums, umfasst ein flexibles Temperierband (1), das zumindest zwei im wesentlichen parallel zu Längskanten des Temperierbandes (1) angeordnete Seitenbereiche (4, 6) aufweist, die miteinander eine dichtende Verbindung eingehen können, so dass das Temperierband (1) zumindest bereichsweise um den zu temperierenden Gegenstand anbringbar ist. Hierbei bildet ein Bereich des Temperierbandes (1) eine von dem Gegenstand weggerichtete Außenfläche (3) und ein weiterer eine zu dem Gegenstand hin orientierte Innenfläche (2), die Strukturelemente (8) aufweist, die bewirken, dass zwischen Innenfläche (2) und Gegenstand ein Strömungsraum (16) für das Temperiermedium entsteht.

## Beschreibung

Die vorliegende Erfindung betrifft ein Temperierband gemäß dem Oberbegriff des Anspruchs 1 sowie eine Temperiervorrichtung gemäß dem Oberbegriff des Anspruchs 12.

Insgesamt bezieht sich die Erfindung auf das Temperieren von Gegenständen und hier insbesondere von Rohrleitungssystemen. Dies ist beispielsweise beim Reaktionsgießen von Interesse, wo mindestens zwei flüssige reaktionsfähige Komponenten miteinander vermischt werden, wodurch eine chemische Reaktion abläuft und ein Kunststoffprodukt entsteht. Bei den reaktionsfähigen Komponenten handelt es sich im wesentlichen um Polyol und Polyisocyanat, die über Rohrleitungssysteme von einem Vorratstank zu einem Mischkopf geleitet werden, wo die Komponenten vermischt und dann in eine Formvorrichtung oder ähnliches ausgetragen werden, wo sie zu einem fertigen Kunststoff aushärten. In den Vorratstanks werden die Komponenten auf eine einem verarbeitungsfähigen Zustand entsprechende Temperatur gebracht. Bei größeren Distanzen zwischen den Vorratstanks und dem Mischkopf sind allerdings die Einflüsse auf die Rohrleitungen zwischen Vorratstank und Mischkopf nicht vernachlässigbar, hier wirken sich beispielsweise die Umgebungstemperatur, der Einsatz einer Hochdruckpumpe zum Fördern der Komponenten und ähnliches aus. Um optimale Bedingungen mit konstanter Temperatur bei der Verarbeitung der Komponenten im Mischkopf zu gewährleisten, ist es daher notwendig, eine zusätzliche Temperaturregelung entweder am Rohrleitungssystem selbst oder kurz vor dem Mischkopf vorzusehen.

Wenn eine Heizfunktion ausreichend ist, kann beispielsweise eine elektrische Begleitheizung entlang der Rohre installiert werden, ist jedoch zum effektiven Temperieren auch eine Kühlfunktion notwendig, war es bisher üblich, kurz vor dem Mischkopf in den Rohrleitungen sehr teuere Hochdruckwärmetauscher einzusetzen oder aber das Leitungssystem aus doppelwandigen Rohren aufzubauen, die mittels eines Temperiermediums auf der gewünschten Temperatur gehalten werden.

Solche doppelwandigen Rohre sind beispielsweise aus der DE 934 210 sowie aus der DE 199 20 059 bekannt. In der DE 934 210 ist ein Schlauch mit einem Innenteil und einem Außenteil beschrieben, wobei letzteres über den Innenteil gezogen ist. An dem Innenteil angeordnete Rippen definieren einen Abstand zwischen den beiden Teilen, wodurch ein Strömungsraum gebildet ist. In der DE 199 20 059 A1 ist ein Mehrkammerschlauch, bei dem ein Strömungsquerschnitt ebenfalls durch Stützstege zwischen einem zentralen Schlauchelement und einem Außenschlauch definiert wird, beschrieben.

Der Einsatz von doppelwandigen Rohren oder Schläuchen ist allerdings ebenfalls sehr teuer und setzt teilweise voraus, dass das Leitungssystem im Vorfeld genauestens bekannt ist, damit die richtigen Rohrlängen gefertigt werden können. Zudem sind Doppelmantelrohre teuer in der Herstellung und aufwendig in der Montage wie im Anschluss, in der Länge nicht flexibel und auch nicht nachrüstbar. Es ist nicht möglich mit ihnen einen optimalen Wirkungsgrad zu erreichen, da Doppelmantelrohre normalerweise aus Metall gefertigt sind und deswegen eine schlechte Wärmeisolierung gegenüber der Umgebung darstellen.

Hochdruckwärmetauscher haben beim Einsatz zur Temperierung den Nachteil, dass sie sehr teuer in der Anschaffung sind. Zudem muss der Druckbehälter hohe Sicherheitsanforderungen erfüllen, und um störende Einflüsse der Umgebung auf das Rohrleitungssystem zwischen Mischkopf und Hochdruckwärmetauscher zu vermeiden, muss der Hochdruckwärmetauscher sehr nahe am Mischkopf montiert werden. Dies hat den zusätzlichen Nachteil, dass bei Anlagen, in denen mehrere Mischköpfe von denselben Vorratstanks versorgt werden, entsprechend auch mehrere teuere Hochdruckwärmetauscher, und zwar jeweils einer pro Mischkopf und Komponente, installiert werden müssen.

Aber auch in vielen anderen Bereichen der Industrie ist man vor das Problem gestellt, Gegenstände auch nachträglich noch mit einer Temperiervorrichtung auszurüsten, die billig und einfach angebracht werden kann und die einfach im Betrieb ist.

Lediglich der Vollständigkeit halber wird auf die DE 299 19 710 U1 hingewiesen, in der ein Schlauch aus einem Verbundwerkstoff beschrieben ist, wobei der Schlauch in Längsrichtung eine Schlitz aufweist, der auf jeweils gegenüberliegenden Seiten hinterschnittene Ausnehmungen aufweist. In den Schlitz können komplementär ausgeformte Wiederhakenelement eingreifen. Mit einem solchen Schlauch ist es möglich, Rohre oder Schläuche zu ummanteln, um diese beispielsweise in Position zu halten, gegen Beschädigungen zu schützen oder gegen Schwingungen zu isolieren. Eine Verwendung zu Kühlzwecken ist nicht angegeben.

Aufgabe der vorliegenden Erfindung ist es deshalb, eine Temperiervorrichtung und ein darin zum Einsatz kommendes Temperierband vorzustellen, bei dem eine nachträgliche Montage möglich ist und die Temperierung von Gegenständen, insbesondere von Rohrleitungssystemen, deutlich preiswerter wird. Das Temperiersystem soll nicht von der Länge des zu temperierenden Gegenstandes abhängig sein, zugleich einen hohen Wirkungsgrad erreichen und sehr flexibel einsetzbar sein.

Diese Aufgabe wird durch ein Temperierband gemäß dem Anspruch 1 bzw. durch eine Temperiervorrichtung gemäß dem Anspruch 12 gelöst. Vorteilhafte Ausgestaltungen und Weiterentwicklungen befinden sich in den Unteransprüchen.

Die Vorteile eines im wesentlichen endlos fertigbaren, speziell geformten Bandes, des sogenannten Temperierbandes, das beispielsweise aus flexiblem Kunststoff bestehen kann, sowie einer Temperiervorrichtung unter Verwendung eines ebensolchen Temperierbandes, liegen in der preisgünstigen Herstellung, der Nachrüstbarkeit auf bestehende Gegenstände und insbesondere Rohrleitungssysteme, da das Band vor Ort auf die gewünschte Länge entsprechend der Rohrleitungsführung abgelängt werden kann, bei einfacher Montage und einem hohen Wirkungsgrad.

Ein erfindungsgemäßes Temperierband weist zwei im wesentlichen parallele Längskanten auf, an die mindestens zwei Seitenbereiche grenzen. Das Temperierband hat eine Vorder- und eine Rückseite, wovon die eine später zumindest bereichsweise als Innenfläche und die andere zumindest bereichsweise als Außenfläche dient. Die an die Längskanten angrenzenden Seitenbereiche, von denen sich einer auf der Vorderseite des Temperierbandes (1) befindet, während der andere auf dessen Rückseite liegt, sind derart ausgebildet, dass sie miteinander eine dichtende Verbindung eingehen können, wenn sie beispielsweise durch Wickeln oder Rollen des Bandes miteinander in Berührung kommen. Der Bereich des Bandes, der später nach einem erwähnten eventuellen Aufrollen oder Aufwickeln als Innenfläche dient, weist erfindungemäß Strukturelemente auf, die derart geformt sind, dass zwischen der Innenfläche und einer gedachte Fläche, die durch die von der Innenfläche am weitesten entfernten Extrema der Strukturelemente gelegt wird, ein Strömungsraum entsteht, der durchgängig beispielsweise für ein Temperiermedium ist.

In besonders bevorzugter Ausgestaltungsweise sind die Strukturelemente einteilig mit dem Temperierband ausgeführt.

Die mindestens zwei Seitenbereiche, die miteinander eine dichtende Verbindung eingehen können, befinden sich im wesentlichen diagonal entgegengesetzt bezüglich einer Längsachse des Temperierbandes, was bedeutet, dass sich einer der Seitenbereiche auf einer Vorderseite des Temperierbandes befindet, während der andere auf dessen Rückseite liegt, und beide jeweils an eine der beiden Längskanten des Temperierbandes angrenzen.

Besonders bevorzugt weist einer der Seitenbereiche Vorsprünge auf die mit Vertiefungen, die im anderen Seitenbereich vorgesehen sind, in Eingriff bringbar sind, wodurch sich eine im wesentlichen dichtende Verbindung herstellen lässt.

Diese Vertiefungen und Vorsprünge können beispielsweise im wesentlichen parallel zu den Längskanten des Temperierbandes verlaufen und durchgängig ausgeführt sein, so dass sie nach Art einer Nut- und Federverbindung zusammenwirken.

In besonders bevorzugter Weise ist das Temperierband derart ausgebildet, dass der eine Seitenbereich im wesentlichen auf der der Innenfläche gegenüberliegenden Rückseite angeordnet ist, d. h. beide Bereiche, sowohl Seitenbereich als auch Innenfläche sind derselben Längskante des Temperierbandes benachbart, während der andere Seitenbereich im wesentlichen auf der der Außenfläche gegenüberliegenden Bandvorderseite befindlich ist und an die andere Längskante grenzt.

Besonders vorteilhaft ist die Ausgestaltung, dass die jeweiligen Seitenbereiche und die auf derselben Bandseite, also der Vorder- bzw. Rückseite des Temperierbandes liegende Innen- bzw. Außenfläche im wesentlichen die gesamte Bandbreite einnehmen.

Zusätzlich können die jeweiligen Seitenbereiche, die miteinander dichtend verbindbar sind, als Klebeflächen ausgebildet sein.

Die im Bereich der Innenfläche vorgesehenen Strukturelemente können beispielsweise als von der Innenfläche vorstehende Noppen ausgebildet sein, wobei ihre genaue Form beliebig ist, sie bevorzugterweise aber auf der von der Innenfläche abgewandten Seite flächig ausgebildet sind. Sie können aber auch als durchgängige, von der Innenfläche vorstehende Rippen ausgebildet sein, wobei es bevorzugt ist, dass die Rippen nicht zu eng benachbart sind, so dass zwischen den einzelnen Rippen genügend Raum für ein Temperiermedium bleibt.

Besonders bevorzugt besteht das Temperierband aus einem flexiblen Material, wodurch eine spätere Anpassung an ein zu temperierendes System erleichtert wird. Zusätzlich ist es von Vorteil, wenn das Temperierband aus einem dehnbaren Material besteht, wie das beispielsweise bei der Verwendung eines Elastomers als Bandmaterial gegeben ist. Aufgrund der Elastizität kann ein Temperierband für verschiedene Rohrdurchmesser eingesetzt werden.

Die vorliegende Erfindung betrifft des weiteren eine Temperiervorrichtung zum Temperieren eines Gegenstands, beispielsweise eines Rohrsystems, wobei jedoch auf einen runden Querschnitt nicht abgestellt werden muss, mittels eines Temperiermediums, wobei das Temperiermedium den zu temperierenden Gegenstand zumindest bereichsweise umströmt. Hierbei kommt ein flexibles Temperierband zum Einsatz, das zumindest zwei im wesentlichen parallel zur Längskanten des Temperierbandes angeordnete Seitenbereiche aufweist, die derart ausgebildet sind, dass sie eine dichtende Verbindung eingehen können, so dass das Temperierband zumindest bereichsweise um den zu temperierenden Gegenstand anbringbar ist, wobei ein Bereich des Temperierbandes eine von dem Gegenstand weggerichtete Außenfläche und ein weiterer Bereich eine zu dem Gegenstand hin orientierte Innenfläche bildet, die Strukturelemente aufweist, durch die zwischen der Innenfläche und dem zu temperierenden Gegenstand ein Strömungsraum verbleibt, in dem ein Temperiermedium zirkulieren kann.

Das in einer erfindungsgemäßen Temperiervorrichtung zum Einsatz kommende Temperierband ist im wesentlichen so ausgebildet wie bereits geschildert.

Bei einer erfindungsgemäßen Temperiervorrichtung ist also ein erfindungsgemäßes Temperierband um einen zu temperierenden Gegenstand derart angebracht, dass Seitenbereiche des Temperierbandes miteinander eine dichtende Verbindung eingehen, und an einem ersten Ende der Temperiervorrichtung eine Abschlussvorrichtung angebracht ist, die als Zulauf für ein eingesetztes Temperiermedium dient, während an einem zweiten, dem ersten Ende im wesentlichen entgegengesetzten Ende der Temperiervorrichtung eine zweite Abschlussvorrichtung vorgesehen ist, die als Ablauf für das Temperiermedium dient. Dieser Ablauf kann auch zu einem weiteren Zulauf für eine gleichartige Temperiervorrichtung, die mit demselben Temperiermedium gespeist wird, führen, was beispielsweise beim Überbrücken von Rohrverbindungen von Vorteil ist.

Erfindungsgemäß zeichnen sich die Abschlussvorrichtungen dadurch aus, dass sie auf der einen Seite dichtend um den Gegenstand anbringbar sind, der zu temperieren ist, während sie auf einer anderen Seite dichtend mit dem um den Gegenstand angebrachten Temperierband abschließen. Die Anbringung des Temperierbandes um den zu temperierenden Gegenstand ist dabei solchermaßen erfolgt, dass durch die dichtende Verbindung der beiden Seitenbereiche dichtend voneinander abgeschlossene, durchgängige Innen- und Außenflächen entstehen. Die Abschlussvorrichtung wiederum ist dichtend mit der Außenfläche des Temperierbandes verbunden und gewährt Zugang zu dem aufgrund der Strukturelemente zwischen Innenfläche und zu temperierendem Gegenstand entstandenen Strömungsraum.

Damit in die Temperiervorrichtung ein Temperiermedium eingespeist werden kann, weist die Abschlussvorrichtung einen Anschluss für das Temperiermedium auf. Dieser Anschluss kann gleichzeitig als Zulauf oder Ablauf zum Einsatz kommen, je nachdem auf welcher Seite der Temperiervorrichtung die Abschlussvorrichtung angebracht ist.

In einer besonders bevorzugten Ausgestaltungsform ist die Abschlussvorrichtung der Temperiervorrichtung aus zwei im wesentlichen halbschalenförmigen Elementen zusammengesetzt, die gegeneinander und gegen den zu temperierenden Gegenstand bzw. die Außenseite des Temperierbandes dichtend verbindbar sind. Diese beiden Elemente können beispielsweise über ein Scharnier miteinander verbunden sein oder aber auch durch weitere Verbindungselemente, beispielsweise Schrauben oder Rohrschellen, miteinander verbunden werden.

Besonders bevorzugt kommt eine erfindungsgemäße Temperiervorrichtung unter Verwendung eines Temperierbandes zum Temperieren eines Rohrleitungssystems zum Einsatz, wobei die Länge der Temperiervorrichtung durch die jeweilige Rohrlänge vorgegeben ist. Durch die Dehnbarkeit und die damit einhergehende Flexibilität des Temperierbandes ist es aber durchaus auch denkbar, dass die Temperiervorrichtung sich über Unebenheiten im Rohrverlauf, wie beispielsweise Biegungen, Rohrverschweißungen oder ähnliches hinwegerstreckt.

In einer besonders bevorzugten Ausführungsart ist das Temperierband derart um ein Rohr angebracht, dass die Längskanten des Temperierbandes im wesentlichen parallel zur Längsachse des Rohres liegen. Hieraus folgt, dass die als Innenfläche des Temperierbandes dienende Fläche eine Quererstreckung aufweist, die geringfügig größer als der oder in etwa gleich dem Umfang des Rohres ist, um das sie angebracht werden soll. Im aufgerollten Zustand hat so die durch die Extrema der Strukturelemente aufgespannte Fläche einen geringfügig kleineren Umfang als der Rohrumfang. Dies bedeutet, dass das Anbringen des Temperierbandes um das Rohr unter etwas Zug erfolgen muss, wodurch die Verbindung der Vorsprünge bzw. der Vertiefungen der Seitenbereiche unter Zug steht und dadurch besser hält. Ein Temperierband kann aufgrund der Elastizität deshalb auch für in einem bestimmten Bereich variierende Rohrdurchmesser verwendet werden. Zusätzlich ist das Temperierband bevorzugt so ausgebildet, dass die beiden Seitenbereiche beim Herstellen der dichtenden Verbindung derart überlappen, dass das Temperierband über den gesamten Umfang des Rohres im wesentlichen doppelt angebracht ist, nur durch eventuelle zusätzliche Klebeflächen auf den Seitenbereichen in etwa mittig zwischen Innen- und Außenfläche getrennt.

lm folgenden soll eine bevorzugte Ausgestaltungsform eines erfindungsgemäßen Temperierbandes sowie einer Temperiervorrichtung unter Einsatz eines ebensolchen anhand von Zeichnungen näher dargestellt werden. Es zeigen:
- Fig. 1:: einen Abschnitt einer Ausführungsform eines erfindungsgemäßen Temperierbandes,
- Fig. 2:: eine alternative Querschnittsform eines erfindungsgemäßen Temperierbandes,
- Fig. 3:: ein Temperierband gemäß Fig. 1, das um ein Rohr angebracht ist, im Schnitt,
- Fig. 4:: eine Abschlussvorrichtung einer erfindungsgemäßen Temperiervorrichtung in der Schnittdarstellung, und
- Fig. 5:: eine Abschlussvorrichtung gemäß Fig. 4 in räumlicher Darstellung.

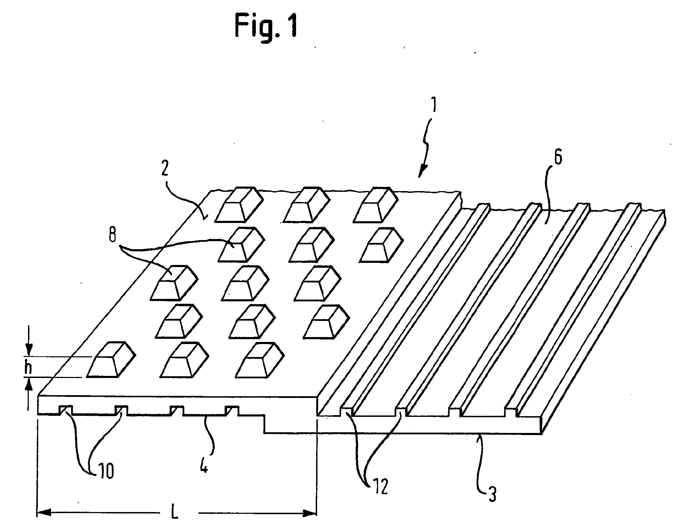

In Fig. 1 ist ein Abschnitt eines erfindungsgemäßen Temperierbandes 1 dargestellt. Dieses Temperierband 1 weist auf einer Vorderseite einen Bereich auf, der später als Innenfläche 2 dient, und der im wesentlichen durch eine linke Längskante des Bandes 1 begrenzt wird, sowie durch einen, parallel zu dieser Längskante verlaufenden, im wesentlichen mittig im Bezug auf die Quererstreckung des Bandes 1 befindlichen Vorsprung, der den Übergang von der Innenfläche 2 auf einen Seitenbereich 6 des Bandes 1 darstellt. Dieser Seitenbereich 6 verläuft parallel zur anderen Längskante des Bandes 1 und weist Vorsprünge 12 auf, die ebenfalls jeweils parallel zur Längskante des Temperierbandes 1 verlaufen. Auf einer Rückseite des Temperierbandes befindet sich ein zweiter Seitenbereich 4, der bezüglich einer Bandlängsachse diagonal gegenüber dem anderen Seitenbereich 6 angeordnet ist und durch die linke Längskante des Bandes begrenzt wird sowie von einem, nicht direkt sichtbaren Bereich, der eine spätere Außenfläche 3 bildet. Dieser in Fig. 1 links unten gelegene Seitenbereich 4 weist Vertiefungen 10 auf, die im wesentlichen die Gegenstücke zu den Vorsprüngen 12 sind und ebenfalls parallel der Längskanten des Bandes im wesentlichen durchgängig verlaufen. Sie sind mit den Vorsprüngen 12 nach Art des Nut- und Federprinzips ausgebildet, so dass die Vorsprünge 12 bei einem Zusammenwickeln des Temperierbandes 1 im wesentlichen passgenau in die Vertiefungen 10 eingreifen können. Auf der späteren Innenfläche 2, die sich bei eben erwähntem Zusammenwickeln des Bandes ausbildet, sind Strukturelemente 8 vorgesehen, die um eine Höhe h über die Innenfläche 2 hervorragen, und im vorliegenden Ausführungsbeispiel die Form von gegeneinander versetzten Noppen annehmen. Diese Noppen sind an ihrem von der Innenfläche 2 am weitesten entfernten Bereich flächig ausgebildet. Legt man eine gedachte Fläche durch diese äußeren Begrenzungsflächen der Strukturelemente, so entsteht zwischen dieser und der Innenfläche 2 ein durchgängiger Strömungsraum der Höhe h, durch den ein Temperiermedium geleitet werden kann.

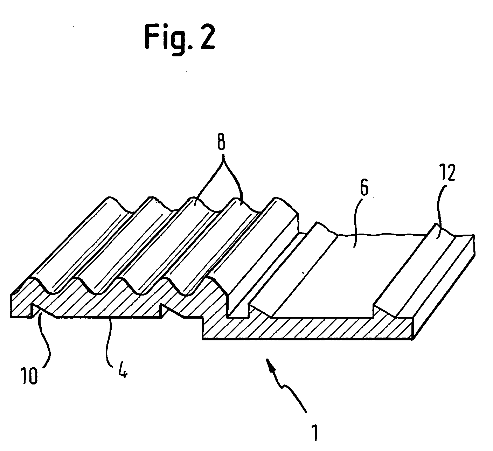

In der Fig. 2 ist eine alternative Ausgestaltungsform eines erfindungsgemäßen Temperierbandes 1 dargestellt. Hier sind die Vertiefungen 10 in dem ersten Seitenbereich 4 sowie die Vorsprünge 12 im zweiten Seitenbereich 6 im Querschnitt im wesentlichen sägezahnförmig ausgebildet, so dass sie bei Zusammenführen der beiden Seitenflächen und Verhaken von den Vertiefungen 10 mit den Vorsprüngen 12 noch besser auf Zug verzahnen. Die Seitenbereiche 4 bzw. 6 können hierzu zusätzlich als Klebeflächen, d. h. mit Kleber beschichtet, ausgebildet sein. Die Strukturelemente 8 sind in dieser Ausgestaltungsform durchgängig und parallel zu den Längskanten des Temperierbandes ausgebildet, die Innenfläche wird im wesentlichen durch die Gründe von wellenförmigen Nuten gebildet.

Ein Temperierband gemäß Fig. 1 und 2 hat den Vorteil, dass es einfach durch Extrusion in Form eines Endlosbandes, beispielsweise aus einem elastomerem Thermoplast, gebildet werden kann.

Die Ausgestaltungsform der Strukturelemente gemäß Fig. 1 weist zusätzlich den Vorteil auf, dass die Noppen in einem strömenden Medium zugleich die Funktion von statischen Mischern übernehmen, wodurch eine gleichmäßige Temperierung des Temperiermediums über den gesamten Strömungsraum sichergestellt werden kann.

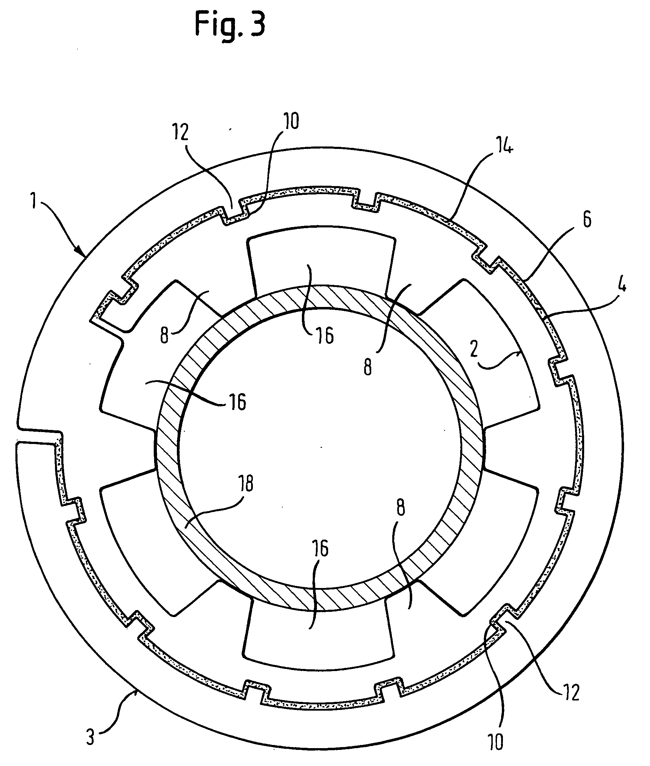

In Fig. 3 ist ein zu temperierendes Rohr 18 im Schnitt dargestellt, das mit einem Temperierband 1 gemäß Fig. 1 umgeben ist. Die Strukturelemente 8 liegen mit ihren äußeren Begrenzungsflächen auf dem Rohr 18 auf und bilden so Abstandshalter zwischen Rohr 18 und Innenfläche 2 des Temperierbandes. Zwischen Strukturelementen 8, Innenfläche 2 und Rohr 18 wird so ein Strömungsraum 16 ausgebildet, der gegen die Umwelt durch die von den Seitenbereichen 4 und 6 mittels ihrer Vertiefungen 10 bzw. Vorsprünge 12 und einer dazwischen aufgebrachten Klebeschicht 14 eingegangene Verbindung dichtend abgeschlossen ist. Der Umfang des Rohres 18 sollte im wesentlichen der Quererstreckung L der späteren Innenfläche 2 des entspannten Temperierbandes 1 entsprechen. Dann muss das Band 1 unter Aufbringen von geringfügigem Zug um das Rohr 18 gewickelt werden, wodurch die Verbindung der Seitenbereiche besser ausgebildet wird. Dadurch, dass die Seitenbereiche 4, 6 im wesentlichen fast den gesamten Umfang des Rohres 18 überdecken, wird zusätzlich eine besonders gute Dichtfunktion der Verbindung sowie eine besonders große Druckstabilität des Temperierbandes 1 gegenüber einem in den Strömungsraum 16 eingeführten, unter Druck stehenden Temperiermedium gewährleistet.

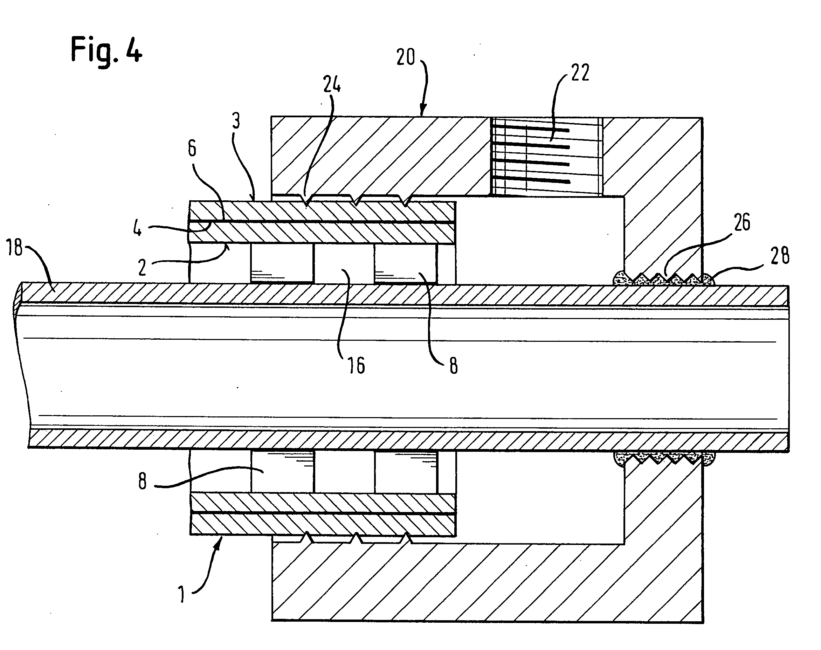

Die Fig. 4 zeigt im Schnitt eine Abschlussvorrichtung 20 einer Temperiervorrichtung, die unter Verwendung eines Temperierbandes 1 gemäß Fig. 1 und Fig. 3 um ein Rohr 18 angebracht ist. Die Abschlussvorrichtung 20 weist einen Zulass 22 für ein Temperiermedium auf. Dieses umströmt zuerst das Rohr 18 und fließt dann in den Strömungsraum 16 zwischen Innenfläche 2 des Temperierbandes 1 und der Außenfläche des Rohrs 18. An ihrem einen, in der Figur linken Ende geht die Abschlussvorrichtung 20 in einem ersten Dichtungsbereich 24 mit dem Temperierband 1 eine dichtende Verbindung ein, beispielsweise durch hervorstehende Zacken 24, die in das flexible Bandmaterial eingreifen und durch gegebenenfalls in diesem Bereich zusätzlich aufgebrachte, nicht dargestellte Dichtmasse. Auf der anderen, in der Figur rechten Seite schließt die Abschlussvorrichtung 20 in einem zweiten Dichtungsbereich 26 dichtend mit dem Rohr 18 ab. Dieser zweite Dichtungsbereich 26 ist derart ausgestaltet, dass eine große Anlagefläche für eine Dichtmasse 28 gebildet wird, die zwischen dieser und der Oberfläche des Rohrs 18 eingebracht wird. Bei der Dichtmasse 28 kann es sich beispielsweise um eine aushärtende Flüssigdichtung handeln. An einem zweiten, nicht dargestellten Ende der Temperiervorrichtung, das sich an einem entgegengesetzten Ende des Temperierbandes 1 befindet, ist eine analoge Abschlussvorrichtung 20 vorgesehen, bei der der Zulass 22 als Auslauf für das Temperiermedium dient.

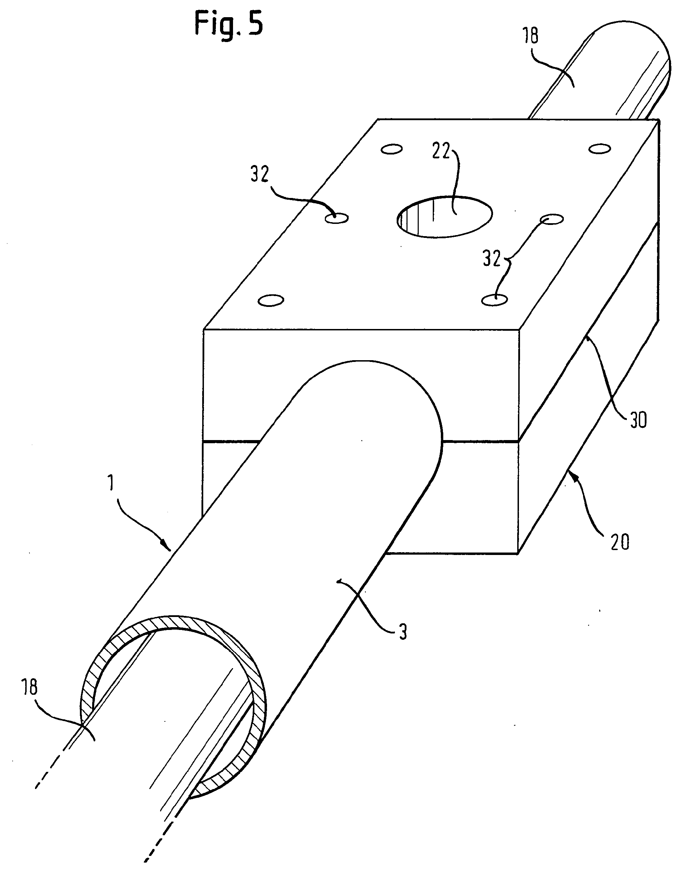

In Fig. 5 ist die Abschlussvorrichtung 20 gemäß Fig. 4 in räumlicher Darstellung gezeigt. Es handelt sich hierbei um eine Halbschalenkonstruktion mit einem oberen und einem unteren Teil, die über Verbindungselemente 32, die beispielsweise als Schrauben ausgebildet sein können, und eine Dichtfläche 30 dichtend miteinander verbunden sind. Gleichzeitig gewährleisten sie über den ersten Dichtungsbereich 24 und den zweiten Dichtungsbereich 26 gemäß Fig. 4 eine dichtende Verbindung mit der Oberfläche des Rohrs 18 einerseits und der Außenfläche 3 des Temperierbands 1 andererseits. Die obere Halbschale weist einen Anschluss 22 für ein Temperiermedium auf, der beispielsweise auch die Form eines Anschlussstutzens annehmen kann. Anders als in der Fig. 5 dargestellt ist es auch denkbar, Halbschalenelemente zu verwenden, die eine zylindrische Außenfläche aufweisen und beispielsweise durch Rohrschellen miteinander verbunden werden.

Das Temperierband gemäß Fig. 1 oder Fig. 2 wird um einen zu temperierenden Gegenstand, ein Rohr 18 oder aber auch einen beispielsweise länglichen Gegenstand mit rechteckigem Querschnitt gewickelt, wobei die beiden Seitenbereiche 4 und 6 miteinander eine dichtende Verbindung eingehen. Dies kann allein durch die erwähnte Nut- und Feder-Verbindung oder aber beispielsweise auch durch zusätzliches Aufbringen einer Klebemasse auf die Seitenbereiche 4, 6 erreicht werden. Hierbei ist es besonders günstig, wenn die Längskanten des Temperierbandes parallel zur Längserstreckung des zu temperierenden Gegenstandes verlaufen, und der Umfang des zu temperierenden Gegenstandes so gewählt ist, dass er geringfügig größer ist, als der von den hervorstehenden Bereichen der Strukturelemente 8 definierte Umfang, da hier vorteilhaft die Elastizität der Temperierbandes 1 eingesetzt werden kann, um ein besseres Verhaken der Vorsprünge 12 mit den Vertiefungen 10 der Seitenbereiche 4 und 6 zu gewährleisten, die dann auf Zug sind. Dieser Effekt lässt sich besonders vorteilhaft auch bei einer Ausgestaltung der Vorsprünge 12 bzw. der Vertiefungen 10 gemäß Fig. 2 ausnutzen.

Zwischen dem zu temperierenden Gegenstand und der Innenfläche 2 des Temperierbandes entsteht so durch die Strukturelemente 8, die einen Abstand h zwischen Innenfläche 2 und Gegenstand sicherstellen, ein Strömungsraum 16, durch den ein Temperiermedium, beispielsweise Wasser, geführt werden kann.

Eine Temperiervorrichtung gemäß der vorliegenden Erfindung unter Einsatz eines flexiblen Temperierbandes 1 ist bei bestehenden Gegenständen, insbesondere bei Rohrleitungssystemen, wie sie beispielsweise bei Reaktionsgießmaschinen zwischen den Vorratstanks für die reaktiven Komponenten und den Mischköpfen zum Einsatz kommen, einfach nachrüstbar, an beliebige Geometrien anpassbar und preisgünstig sowohl aufgrund der Herstellung als extrudiertes Bandmaterial als auch aufgrund der problemlosen Montage.

Die Druckstabilität einer solchen Temperiervorrichtung kann weiter erhöht werden, indem das geschlossene Temperierband 1 mit nicht elastischen Bandagen umgeben wird, oder aber auch dadurch, dass in druckkritischen Bereichen feste Schalen, beispielsweise aus Metall oder Kunststoff, um das Band 1 angebracht werden.

Durch den Einsatz eines Temperierbandes 1 aus Kunststoff, vorteilhafter Weise aus elastomerem Thermoplast, weist die vorgestellte Temperiervorrichtung zusätzlich einen guten Wirkungsgrad auf, da thermoplastisches Material isolierend wirkt, und so eine hohe Temperaturstabilität des Temperiermediums gewährleistet wird.

### Bezugszeichenliste

- 1: Temperierband
- 2: Innenfläche
- 3: Außenfläche
- 4: erster Seitenbereich
- 6: zweiter Seitenbereich
- 8: Strukturelement
- 10: Vertiefung
- 12: Vorsprung
- 14: Klebespalt
- 16: Strömungsraum
- 18: Rohr
- 20: Abschlussvorrichtung
- 22: Anschluss
- 24: erster Dichtungsbereich
- 26: zweiter Dichtungsbereich
- 28: Dichtmasse
- 30: Dichtfläche
- 32: Verbindungselement

## Patentansprüche

1. Temperierband (1) mit zwei im wesentlichen parallelen Längskanten, mindestens zwei Seitenbereichen (4, 6), die im wesentlichen an die Längskanten angrenzen, einer Vorderseite und einer Rückseite, wovon eine später zumindest bereichsweise als Innenfläche (2) und die andere zumindest bereichsweise als Außenfläche (3) dient,
**dadurch gekennzeichnet, dass**
sich einer der mindestens zwei Seitenbereiche (4, 6), auf der Vorderseite des Temperierbandes (1) befindet, während der andere auf dessen Rückseite liegt, die Seitenbereiche (4, 6) derart ausgebildet sind, dass sie miteinander eine dichtende Verbindung eingehen können, und dass im Bereich der Innenfläche (2) Strukturelemente (8) derart vorgesehen sind, dass zwischen der Innenfläche (2) und einer durch die von der Innenfläche (2) am weitesten entfernten Extrema der Strukturelemente (8) gelegten Fläche ein Strömungsraum gebildet wird.

2. Temperierband nach Anspruch 1,
**dadurch gekennzeichnet, dass**
die Strukturelemente (8) einteilig mit dem Temperierband (1) ausgeführt sind.

3. Temperierband nach einem der Ansprüche 1 bis 2,
**dadurch gekennzeichnet, dass**
einer der Seitenbereiche (4, 6) Vorsprünge (12) aufweist, während im anderen Seitenbereich Vertiefungen (10) vorgesehen sind, die mit den Vorsprüngen (12) in Eingriff bringbar ausgebildet sind.

4. Temperierband nach Anspruch 3,
**dadurch gekennzeichnet, dass**
die Vorsprünge (12) und die Vertiefungen (10) im wesentlichen durchgängig parallel zu den Längskanten des Temperierbandes (1) verlaufen und nach Art von Nut und Feder ausgebildet sind.

5. Temperierband nach einem der Ansprüche 1 bis 4,
**dadurch gekennzeichnet, dass**
der eine Seitenbereich (4) im wesentlichen auf der der Innenfläche (2) gegenüberliegenden Rückseite angeordnet ist, während sich der andere Seitenbereich im wesentlichen auf der der Außenfläche (3) gegenüberliegenden Vorderseite befindet.

6. Temperierband nach einem der Ansprüche 1 bis 5,
**dadurch gekennzeichnet, dass**
die jeweiligen Seitenbereiche (4, 6) und die Innen- (2) bzw. Außenfläche (3) im wesentlichen die gesamte Vorder- bzw. Rückseite des Temperierbandes (1) einnehmen.

7. Temperierband nach einem der Ansprüche 1 bis 6,
**dadurch gekennzeichnet, dass**
die jeweiligen Seitenbereiche (4, 6) als Klebeflächen ausgebildet sind.

8. Temperierband nach einem der Ansprüche 1 bis 7,
**dadurch gekennzeichnet, dass**
die Strukturelemente (8) als von der Innenfläche (2) vorstehende Noppen ausgebildet sind.

9. Temperierband nach einem der Ansprüche 1 bis 8,
**dadurch gekennzeichnet, dass**
die Strukturelemente (8) als von der Innenfläche (2) vorstehende durchgängige Rippen ausgebildet sind.

10. Temperierband nach einem der Ansprüche 1 bis 9,
**dadurch gekennzeichnet, dass**
es aus einem flexiblen Material besteht.

11. Temperierband nach einem der Ansprüche 1 bis 10,
**dadurch gekennzeichnet, dass**
es aus einem dehnbaren Material besteht.

12. Temperiervorrichtung zum Temperieren eines Gegenstandes mittels eines Temperiermediums, wobei das Temperiermedium den Gegenstand zumindest bereichsweise umströmt,
**dadurch gekennzeichnet, dass**
die Temperiervorrichtung ein flexibles Temperierband (1) umfasst, das zumindest zwei im wesentlichen parallel zu Längskanten des Temperierbandes (1) angeordnete Seitenbereiche (4, 6) aufweist, die sowohl im Hinblick auf die Längs- als auch auf die Tiefenerstreckung des Temperierbandes (1) auf gegenüberliegenden Seiten angeordnet sind und derart ausgebildet sind, dass sie eine dichtende Verbindung eingehen können, wobei das Temperierband (1) zumindest bereichsweise um den zu temperierenden Gegenstand angeordnet ist, ein Bereich des Temperierbandes (1) eine von dem Gegenstand weggerichtete Außenfläche (3) und ein weiterer Bereich eine zu dem Gegenstand hin orientierte Innenfläche (2) bildet, die Strukturelemente (8) aufweist, die derart ausgestaltet sind, dass zwischen Innenfläche (2) und Gegenstand ein Strömungsraum (16) für das Temperiermedium entsteht.

13. Temperiervorrichtung nach Anspruch 12,
**dadurch gekennzeichnet, dass**
die Seitenbereiche (4, 6) jeweils im wesentlichen der Innen- (2) bzw. der Außenfläche (3) gegenüberliegen.

14. Temperiervorrichtung nach Anspruch 12 oder 13,
**dadurch gekennzeichnet, dass**
die jeweiligen Seitenbereiche (4, 6) und die Innen- (2) bzw. Außenfläche (3) im wesentlichen die gesamte Vorder- bzw. Rückseite des Temperierbandes (1) einnehmen.

15. Temperiervorrichtung nach einem der Ansprüche 12 bis 14,
**dadurch gekennzeichnet, dass**
einer der Seitenbereiche (4, 6) des Temperierbandes (1) Vorsprünge (12) aufweist, während im anderen Seitenbereich Vertiefungen (10) vorgesehen sind, die mit den Vorsprüngen (12) in Eingriff gebracht sind.

16. Temperiervorrichtung nach Anspruch 15,
**dadurch gekennzeichnet, dass**
die Vorsprünge (12) und die Vertiefungen (10) parallel zu den Längskanten des Temperierbandes (1) im wesentlichen nach Art von Nut und Feder ausgebildet sind.

17. Temperiervorrichtung nach einem der Ansprüche 12 - 16,
**dadurch gekennzeichnet, dass**
die Strukturelemente (8) einteilig mit dem Temperierband (1) ausgeführt sind.

18. Temperiervorrichtung nach einem der Ansprüche 12 - 17,
**dadurch gekennzeichnet, dass**
die Strukturelemente (8) als von der Innenfläche (2) des Temperierbandes (1) vorstehende Noppen ausgebildet sind.

19. Temperierband nach einem der Ansprüche 12 - 18,
**dadurch gekennzeichnet, dass**
die Strukturelemente (8) als von der Innenfläche (2) des Temperierbandes (1) vorstehende durchgängige Rippen ausgebildet sind.

20. Temperiervorrichtung nach einem der Ansprüche 12 bis 19,
**dadurch gekennzeichnet, dass**
das Temperierband (1) aus einem dehnbaren Material besteht.

21. Temperiervorrichtung nach einem der Ansprüche 12 - 20,
**dadurch gekennzeichnet, dass**
an einem ersten Ende der Temperiervorrichtung (1) eine Abschlussvorrichtung (20) als Zulauf für das Temperiermedium und an einem dem ersten Ende im wesentlichen entgegengesetzten Ende eine zweite Abschlussvorrichtung (20) als Ablauf für dasselbe vorgesehen ist.

22. Temperiervorrichtung nach Anspruch 20 oder 21,
**dadurch gekennzeichnet, dass**
die Abschlussvorrichtung (20) auf der einen Seite dichtend um den Gegenstand angeordnet ist und auf einer anderen Seite dichtend mit dem um den Gegenstand angebrachten Temperierband (1) abschließt.

23. Temperiervorrichtung nach einem der Ansprüche 20 bis 22,
**dadurch gekennzeichnet, dass**
die Abschlussvorrichtung (20) einen Anschluss (22) für das Temperiermedium aufweist.

24. Temperiervorrichtung nach einem der Ansprüche 20 bis 23,
**dadurch gekennzeichnet, dass**
die Abschlussvorrichtung (20) aus zwei im wesentlichen halbschalenförmigen Elementen ausgeführt ist, die gegeneinander dichtend verbindbar sind.

25. Temperiervorrichtung nach einem der Ansprüche 11 bis 24,
**dadurch gekennzeichnet, dass**
der Gegenstand ein Rohr (18) ist.

26. Temperiervorrichtung nach Anspruch 25,
**dadurch gekennzeichnet, dass**
das Temperierband (1) derart um das Rohr (18) angebracht ist, dass die Längskanten des Temperierbandes (1) im wesentlichen parallel zu der Längsachse des Rohres (18) liegen.
